# EUROPEAN PATENT APPLICATION

(11) **EP 1 491 469 A1**
(43) Date of publication of application: **29.12.2004**
(21) Application number: 04253542.7
(22) Date of filing: 14.06.2004
(51) Int. Cl.: B65G 53/46, B65D 90/58, F16K 3/03

(54) **Feeders for pressurized systems**

(30) Priority: 16.06.2003 GB 0313921
(71) Applicant: Cubic Systems Ltd., Wilts BA13 4ES (GB)
(72) Inventor: Jaubert, J., Fleet, Hants GU51 3NA (GB)
(74) Representative: Harman, Michael Godfrey

(57) **Abstract**

A feeder for feeding powdered or granular material from an inlet pipe (13) into a pneumatic conveyor pipe or pressurized vessel (16). A chamber (10) has upper and lower gate valves (11,12) which are opened alternately to admit material to the chamber and pass it out therefrom. Pressure control means (30,35) control the pressure in the chamber, coupling the chamber around the upper and lower gate valves alternately. The gate valves are preferably rotary segment valves, and the segments are preferably inverted V shaped. Preferably also the segments undergo slight vertical movement.

## Description

The present invention relates to pressurized systems such as pressurized vessels or pneumatic conveyor systems, which are systems for conveying dry granular or powder material pneumatically, and more specifically to inlet feeders for introducing material to such systems.

One well-known technique for conveying powered or granular material is pneumatically. The material is introduced into a pipe through which a flow of air or other gas is maintained, and the material is carried along the pipe by the gas flow.

In order to ensure proper introduction of the material into the pipe (or more generally into a pressurized vessel), a suitable feeder arrangement is necessary, to ensure proper flow of material and prevent back flow. In some circumstances, a screw feed arrangement can be used. In many situations, however, an air or gas lock in the form of a valve arrangement is desirable.

One common form of such a valve feeder is a multi-blade rotary valve, which comprises a set of blades mounted radially on a shaft. The shaft is positioned across a vertical channel which is coupled to the pneumatic pipe. The material to be introduced to the pipe is held in a hopper or me like at the top of the channel, and falls onto the valve, entering the compartments formed by the blades. As the shaft rotates, so the compartments are carried round from the inlet side of the channel to the outlet side, where their contents fall out and down the outlet side of the channel into the pipe, where they are then carried along by the pneumatic gas flow in the pipe. The now empty compartments are carried round further to the inlet side of the channel, where the process is repeated.

The object of the present invention is to provide an improved form of valve feeder for feeding powdered or granular material into a pneumatic conveyor pipe or pressurized vessel.

According to the invention there is provided a feeder for feeding powdered or grammar material into a pneumatic conveyor pipe or pressurized vessel, the arrangement comprising a chamber having upper and lower gate valves which are opened alternately to admit material to the chamber and pass it out therefrom. Preferably pressure control means are provided for controlling the pressure in the chamber, the control means preferably coupling the chamber around the upper and lower gate valves alternately. Preferably the gate valves are rotary segment valves, and the segments are preferably inverted V shaped. Preferably also the segments undergo slight vertical movement.

The present feeder, unlike the known rotary feeder described above, does not generally require any castings of specialized shape. It can therefore be manufactured relatively simply and easily, particularly for larger sizes, and is suitable for relatively high temperature and/or pressure uses.

Further significant features of the invention will become apparent from the following detailed description of a valve feeder embodying the invention, given by way of example and with reference to the drawings, in which:
Fig. 1 is a general side view of the feeder;
Fig. 2 is a vertical section through the feeder;
Figs. 3A and 3B are top views of the two gate valves of the feeder; and
Figs. 4-1 and 4-2 are part sectional views of the operation of the valves.

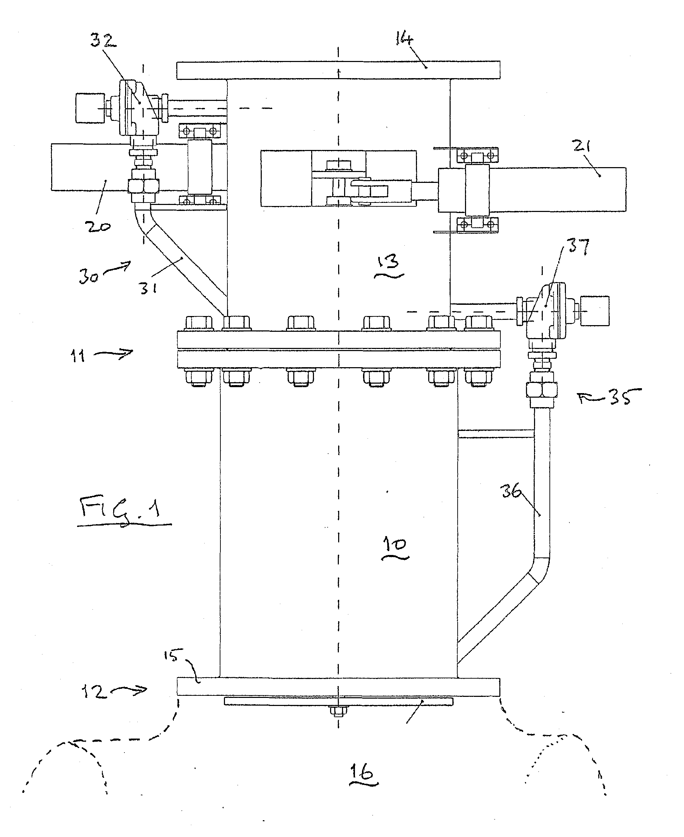

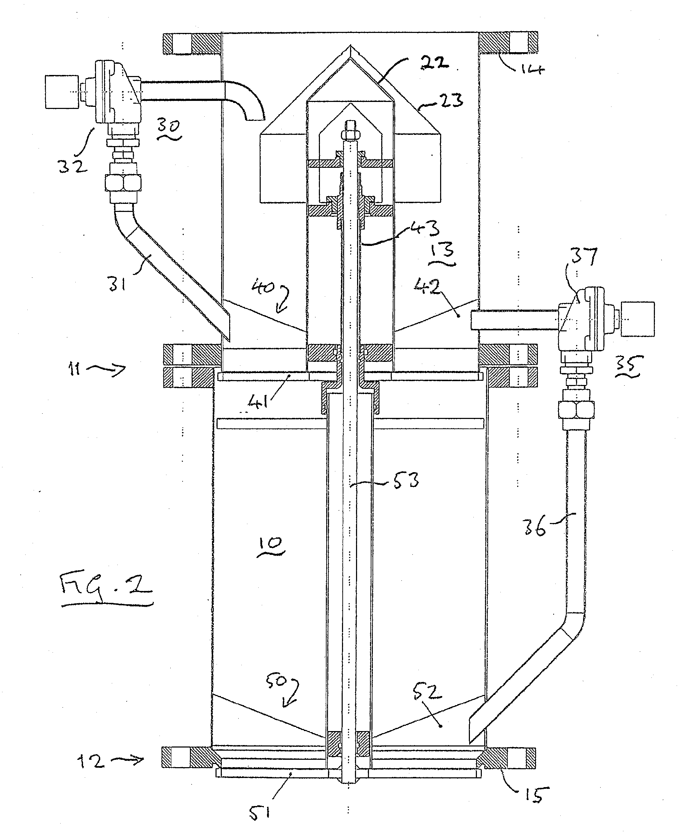

Referring to Figs. 1 and 2, the feeder comprises a chamber 10 having an upper gate valve 11 and a lower gate valve 12. The lower gate valve 12 is surrounded by a flange 15 which is intended to be attached, either directly or via a coupling pipe (not shown), to the main pneumatic transport pipe 16 passing horimentally beneath the feeder. The upper gate valve 11 is surmounted by an inlet pipe 13 having an upper flange 14 on which a feed hopper (not shown) can be mounted.

A pair of gate valve actuators 20 and 21 are mounted against the inlet pipe 13 and actuate the gate valves 11 and 12 by mechanisms described below. These actuators are shown mounted opposite each other, but they could for example be mounted one above the other.

A first pressure control or vent means 30, comprising a pipe 31 and a vent valve 32, is arranged between the chamber 10 and a low or atmospheric pressure point, in this case the feed pipe 13; a second vent means 35, comprising a pipe 36 and a vent valve 37, is arranged between a high pressure source, in this case the transport pipe 16, and the chamber 10. (On a superficial glance, the connections of the vent means shown in Fig. 1 do not appear to be consistent with the connections just described; this apparent anomaly will be explained below.)

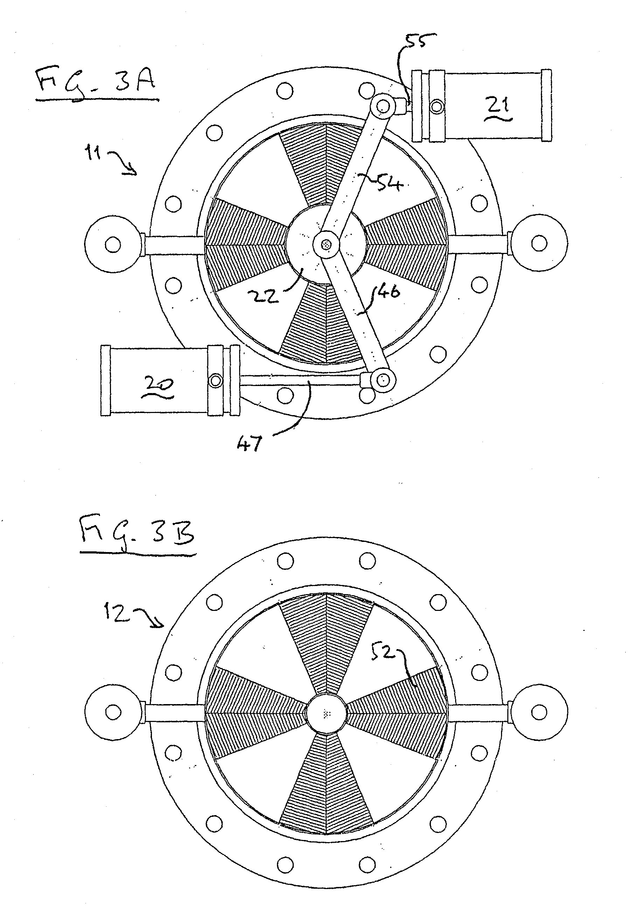

Figs. 2 and 3A show the upper gate valve 11. This valve comprises a fixed stator element 40 and a rotor element 41, each having four segments. The rotor element 41 is mounted on a hollow shaft 43 which is coupled to the actuator 20 via a radial arm 46 and a rod 47, so that the rotor 41 can be rotated to and fro through a roughly 45° range.

The rotor 41 and stator 40 each have four segments of roughly 45° size separated by 45° gaps. The rotor can thus be rotated between a position in which the gaps in the stator are wholly closed and a position in which they are wholly open. The rotor 41 is planar. The stator 40, however, comprises four segments 42 each of which is in the form of an inverted V; the angle of the V may conveniently be around 90° (giving 45° slopes for both sides) for granular material, or 60° (giving 60° slopes for both sides) for powdery material. This promotes the smooth flow of the material without any significant trapping of or dead regions for the material.

Figs. 2 and 3B show the lower gate valve 12, which is broadly similar to gate valve 11, comprising a fixed stator element 50 and a rotor element 51, each having tour segments. The rotor element 51 is mounted on a shaft 53, passing through the hollow shaft 43, which is coupled to the actuator 21 via a radial arm 54 and a rod 55. This coupling, and the corresponding coupling for the valve 11, are shrouded by shrouding 22; the arms 44 and 54 are similarly shrouded by shrouding 23. If desired, positive air pressure may be introduced into either or both shroudings and/or the shaft 43 to keep out the material passing through the pipe 13. As with valve 11, the rotor element 51 is planar and the stator element 51 comprises four segments 52 each in the form of an inverted V.

As shown in Fig. 2, the pipe 36 of the vent means 35 opens into the space inside one of the inverted V elements 52 of the stator 50 of gate valve 12. This pipe thus communicates directly with the pneumatic transport pipe 16 beneath the feeder when the gate valve 12 is closed. (The pipe 36 may alternatively be fed from the compressor (not shown) which feeds the pipe 16.) The outlet of the vent valve 37 opens into the space inside one of the inverted V elements 42 of the stator 40 of gate valve 11. This pipe thus communicates directly with the chamber 10 when the gate valve 11 is closed. Similarly, the outlet of the vent valve 32, and the pipe 31 of the vent means 30, open into the top of the inlet pipe 13 and the top of the chamber 10 respectively. (The valve 32 is shown venting into the inlet pipe 13, but it may alternatively vent to atmosphere.) These connections keep the openings of the vent means largely clear of the material passing through the feeder.

In use, each vent means 30 and 35 is operated (ie its vent valve 32 or 37 is opened) to equalize the pressure in the two regions which is connects just before the gate valve 11 or 12 between those two regions is opened. Each vent valve is closed with the closing of the associated gate valve.

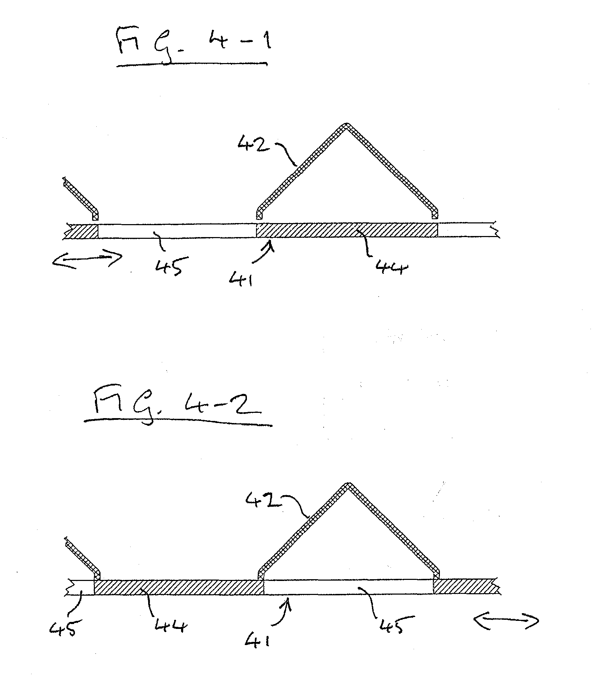

Fig. 4-1 shows the valve 11 in the open position, and Fig. 4-2 shows it in the closed position. The valve rotor 41 consists of four solid segments 44 separated by openings 45, and rotates to and fro below the stator segments 42. The rotor 41 is mounted with the freedom to float axially (vertically) by a small amount. When the pressure is equalized across the gate by the associated vent valve, the rotor will drop slightly away from the stator vanes under its own weight together with the weight of any material in the chamber 13 above it. This downward movement will allow the actuator to move the rotor with minimal effort. When the vent valve and the gate valve are closed, the pressure across the gate valve will rise; this pressure will lift the rotor and press it against the stator vanes, improving the sealing of the gate.

A single full cycle of operation is as follows, starting from the state in which all valves are closed:
1 vent valve 32 is opened, equalizing the pressure in the chamber 10 with that in the feed pipe 13.
2 Feed gate valve 11 is opened, allowing material to enter the chamber 10 under gravity from. the feed pipe 13.
3 Feed gate valve 13 and vent valve 32 are both closed.
4 Vent valve 37 is opened, equalizing the pressure in the chamber 10 with that in the pneumatic transport pipe 16.
5 Feed gate valve 12 is opened, allowing material to leave the chamber 10 under gravity towards the pneumatic transport pipe 16.
6 Feed gate valve 12 and vent valve 37 are both closed.

If desired, either or both of the vent means may be modified to provide positive downward pressure in the feeder (ie from inlet pipe 13 to the chamber 10, and from, the chamber 10 to the main pipe 16) when the corresponding gate valve 11 and/or 12 is open, to promote the flow of the material.

The control of the gate valves and vent valves may be achieved by means of suitable mechanical or pneumatic interlocking arrangements, or by means of an electrical/electronic or pneumatic controller.

The gate valves 11 and 12 may use simple metal components giving hard metal-to-metal seats, or may incorporate polymer seals to provide soft seat low leakage seals. Baffles or deflectors may be provided on the stator vanes to prevent pellets of granular material from being cut by the leading edges of the stator when the gate valves close. Obviously any convenient numbers of segments can be used; four segments are shown in the drawings, but six may be more suitable for large capacity valves.

## Claims

1. A feeder for feeding powdered or granular material into a pneumatic conveyor pipe or pressurized vessel (16), the arrangement comprising a chamber (10) having upper (11) and lower (12) gate valves which are opened alternately to admit material to the chamber and pass it out therefrom.

2. A feeder according to claim 1 including pressure control means (30, 35) for controlling the pressure in the chamber.

3. A feeder according to claim 2 wherein the control means (30, 35) couple the chamber around the upper and lower gate valves (11, 12) alternately.

4. A feeder according to any previous claim wherein the gate valves are rotary segment valves.

5. A feeder according to claim 4 wherein the segments are inverted V shaped.

6. A feeder according to either of claims 4 and 5 wherein the segments undergo slight vertical movement.

7. Any feature of novelty or combination thereof within the meaning of Article 4H of the International Convention (Paris Convention).
